# EUROPEAN PATENT APPLICATION

(11) **EP 4 746 513 A1**
(43) Date of publication of application: **20.05.2026**
(21) Application number: 24839938.8
(22) Date of filing: 25.06.2024
(51) Int. Cl.: H04W 28/24, H04W 28/02, H04W 76/15

(54) **METHOD FOR DETERMINING QOS IN DUAL 3GPP ACCESS**

(30) Priority: 12.07.2023 US 202363526193 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Plasseraud IP
(86) International application number: PCT/KR2024/008758
(87) International publication number: WO 2025/014124

(57) **Abstract**

One disclosure in the present specification provides a method by which an AAnF performs communication. The method comprises: a step of establishing a PDU session for a UE through a first 3GPP access and a second 3GPP access; a step in which an SMF among one or more NFs creates an alternative QoS including at least one QoS, on the basis of a QoS request from an AF; a step of determining, on the basis of the information on the QoS received from each base station, whether the PDU session satisfies QoS requirements the AF has requested.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

When a PDU session is established via dual 3GPP access, it is necessary to determine the QoS for the session by taking the dual 3GPP access into account.

### DESCLOSURE

### TECHNICAL SOLUTION

The network receives satisfactory alternative QoS from each base station and decides whether it can satisfy the requested QoS based on the received information.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIGS. 6 and 7 shows flowcharts according to the first embodiment of the present disclosure.
FIGS. 8 and 9 show flowcharts according to the second embodiment of the present specification.
FIG. 10 shows the procedure of at least one NF according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

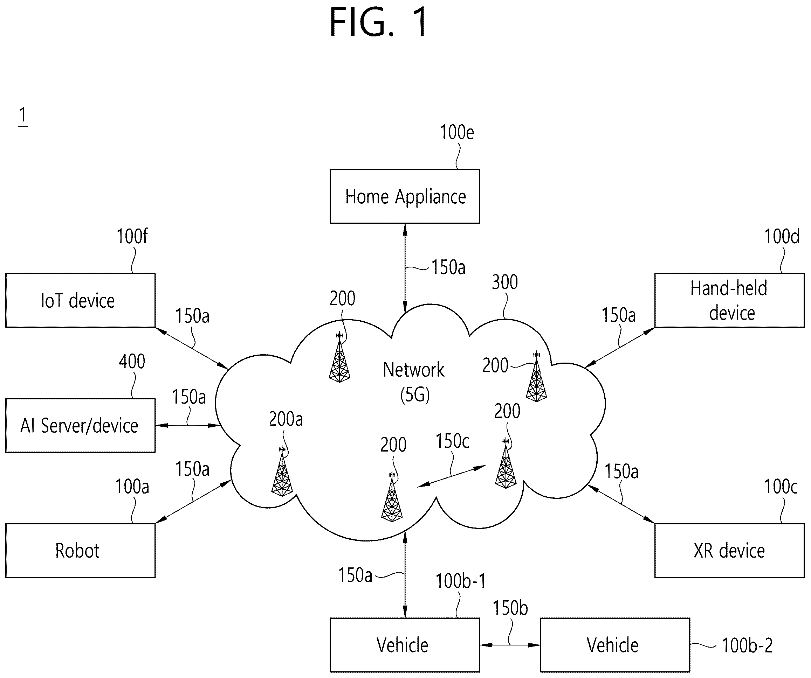

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

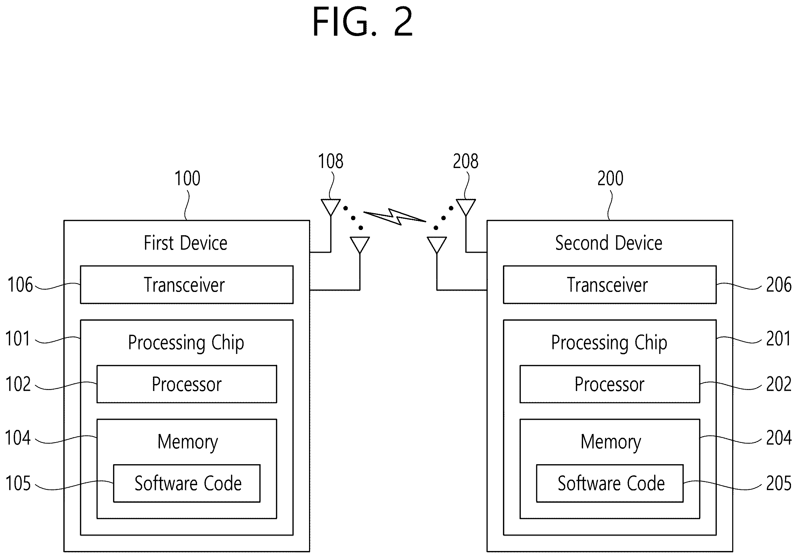

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

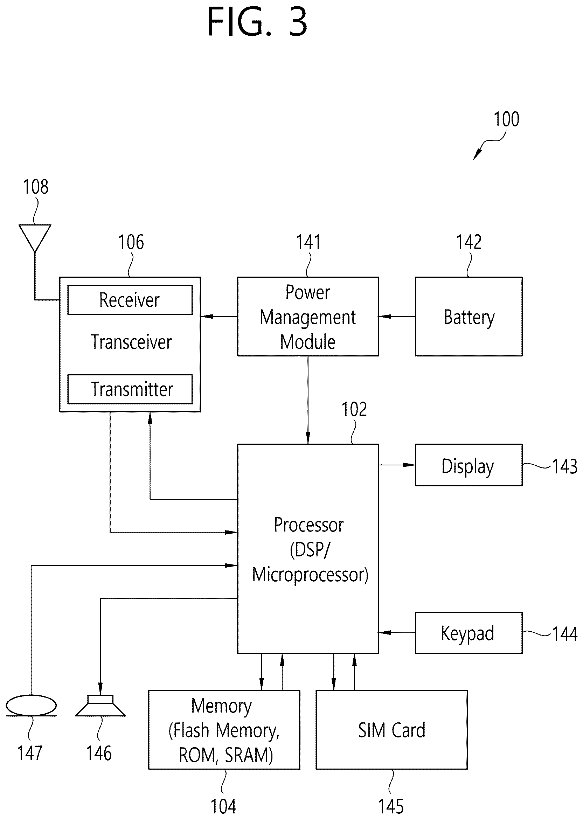

**FIG. 3** **shows an example of UE to which implementations of the present disclosure is applied.**

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

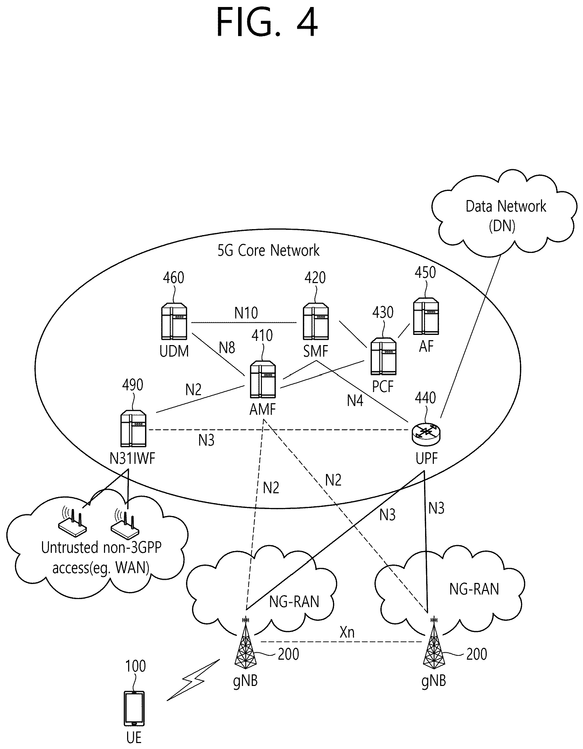

**FIG. 4** **is a block diagram of a next generation cellular network.**

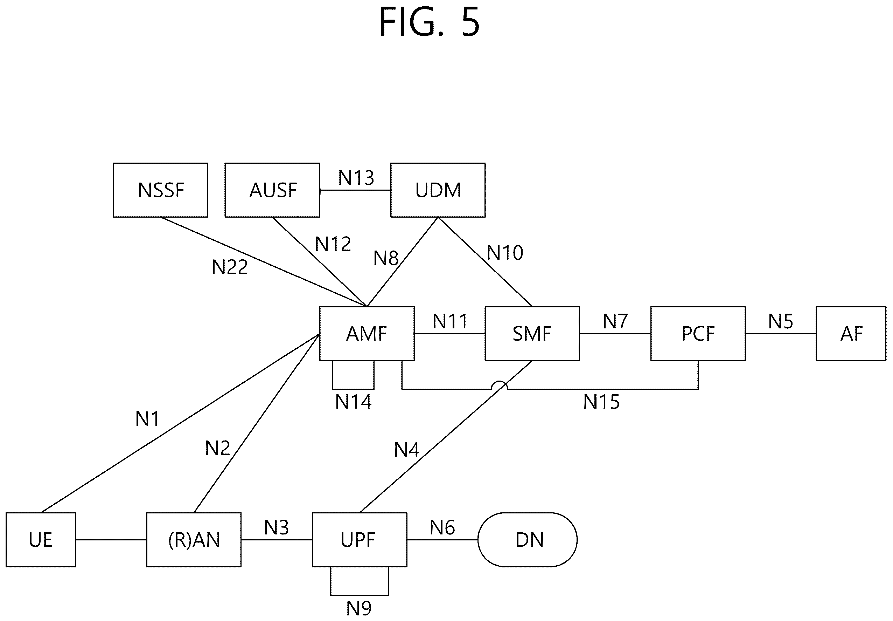

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Notification control>

### 1. General

The QoS Parameter Notification control indicates to the NG-RAN:
- notifications of "GFBR can no longer (or can again) be guaranteed" are requested when the NG-RAN determines that the GFBR, the PDB or the PER of the QoS profile cannot be fulfilled (or can be fulfilled again) for a QoS Flow (during the lifetime of the QoS Flow) and that the QoS Flow should be kept while the NG-RAN is not fulfilling the requested QoS profile.

Notification control may be used for a GBR QoS Flow if the application traffic is able to adapt to the change in the QoS (e.g. if the AF is capable to trigger rate adaptation).

The NG-RAN determination whether the GFBR, the PDB and the PER can be fulfilled or not, is done under consideration of the QoS parameters Averaging Window and MDBV (for a GBR QoS Flow using the Delay-critical resource type), which are either provided explicitly as part of the QoS profile or implicitly via the standardized 5QI QoS characteristics.

The SMF shall only enable Notification control when the QoS Notification Control parameter is set in the PCC rule (received from the PCF) that is bound to the QoS Flow. The Notification control parameter is signaled to the NG-RAN as part of the QoS profile.

### 2. Notification Control without Alternative QoS Profiles

If, for a given GBR QoS Flow, Notification control is enabled and the NG-RAN determines that the GFBR, the PDB or the PER of the QoS profile cannot be fulfilled, NG-RAN shall send a notification towards SMF that the "GFBR can no longer be guaranteed". Furthermore, the NG-RAN shall keep the QoS Flow (i.e. while the NG-RAN is not fulfilling the requested QoS profile for this QoS Flow), unless specific conditions at the NG-RAN require the release of the NG-RAN resources for this GBR QoS Flow, e.g. due to Radio link failure or RAN internal congestion. The NG-RAN should try to fulfil the GFBR, the PDB and the PER of the QoS profile again.

NG-RAN can decide that the "GFBR can no longer be guaranteed" based on, e.g. measurements like queuing delay or system load.

Upon receiving a notification from the NG-RAN that the "GFBR can no longer be guaranteed", the SMF may forward the notification to the PCF.

When the NG-RAN determines that the GFBR, the PDB and the PER of the QoS profile can be fulfilled again for a QoS Flow (for which a notification that the "GFBR can no longer be guaranteed" has been sent), the NG-RAN shall send a notification, informing the SMF that the "GFBR can again be guaranteed" and the SMF may forward the notification to the PCF. The NG-RAN shall send a subsequent notification that the "GFBR can no longer be guaranteed" whenever necessary.

If the QoS Flow is modified, the NG-RAN restarts the check whether the "GFBR can no longer be guaranteed" according to the updated QoS profile. If the Notification control parameter is not included in the updated QoS profile, the Notification control is disabled.

During a handover, the Source NG-RAN does not inform the Target NG-RAN about whether the Source NG-RAN has sent a notification for a QoS Flow that the "GFBR can no longer be guaranteed". The Target NG-RAN performs admission control rejecting any QoS Flows for which resources cannot be permanently allocated. The accepted QoS Flows are included in the N2 Path Switch Request or N2 Handover Request Acknowledge message from the NG-RAN to the AMF.

The SMF shall interpret the fact that a QoS Flow is listed as transferred QoS Flow in the
Nsmf_PDUSession_UpdateSMContext Request received from the AMF as a notification that "GFBR can again be guaranteed" for this QoS Flow unless the SMF is also receiving a reference to an Alternative QoS Profile for this QoS Flow. After the handover is successfully completed, the Target NG-RAN shall send a subsequent notification that the "GFBR can no longer be guaranteed" for such a QoS Flow whenever necessary. If the SMF has previously notified the PCF that the "GFBR can no longer be guaranteed" and the SMF does not receive an explicit notification that the "GFBR can no longer be guaranteed" for that QoS Flow from the Target NG-RAN within a configured time, the SMF shall notify the PCF that the "GFBR can again be guaranteed".

### 3. Notification control with Alternative QoS Profiles

If, for a given GBR QoS Flow, Notification control is enabled and the NG-RAN has received a list of Alternative QoS Profile(s) for this QoS Flow and supports the Alternative QoS Profile handling, the following shall apply:
1) If the NG-RAN determines that the GFBR, the PDB or the PER of the QoS profile cannot be fulfilled, NG-RAN shall send a notification towards SMF that the "GFBR can no longer be guaranteed". Before sending a notification that the "GFBR can no longer be guaranteed" towards the SMF, the NG-RAN shall check whether the GFBR, the PDB and the PER that the NG-RAN currently fulfils match any of the Alternative QoS Profile(s) in the indicated priority order. If there is a match, the NG-RAN shall indicate the reference to the matching Alternative QoS Profile with the highest priority together with the notification to the SMF.
   If there is no match, the NG-RAN shall send a notification that the "GFBR can no longer be guaranteed" towards the SMF indicating that the lowest Alternative QoS Profile cannot be fulfilled (unless specific conditions at the NG-RAN require the release of the NG-RAN resources for this GBR QoS Flow, e.g. due to Radio link failure or RAN internal congestion).
2) If a notification that the "GFBR can no longer be guaranteed" has been sent to the SMF and the NG-RAN determines that the currently fulfilled GFBR, PDB or PER are different (better or worse) from the situation indicated in the last notification, the NG-RAN shall send a notification (i.e. "GFBR can no longer be guaranteed" or "GFBR can again be guaranteed") to the SMF and indicate the current situation (unless specific conditions at the NG-RAN require the release of the NG-RAN resources for this GBR QoS Flow, e.g. due to Radio link failure or RAN internal congestion).
   The current situation is either that the QoS Profile can be fulfilled (which is implicitly indicated by the "GFBR can again be guaranteed" notification itself), that a different Alternative QoS Profile can be fulfilled, or that the lowest priority Alternative QoS Profile cannot be fulfilled.
3) The NG-RAN should always try to fulfil the QoS profile and, if this is not possible, any Alternative QoS Profile that has higher priority.
   In order to avoid a too frequent signaling to the SMF, it is assumed that NG-RAN implementation can apply hysteresis (e.g. via a configurable time interval) before notifying the SMF that the currently fulfilled values match the QoS Profile or a different Alternative QoS Profile of higher priority. It is also assumed that the PCF has ensured that the QoS values within the different Alternative QoS Profile(s) are not too close to each other.
4) Upon receiving a notification from the NG-RAN, the SMF may inform the PCF. If it does so, the SMF shall indicate the currently fulfilled situation to the PCF.
5) If the PCF has not indicated differently, the SMF uses NAS signaling (that is sent transparently through the RAN) to inform the UE about changes in the QoS parameters (i.e. 5QI, GFBR, MFBR) that the NG-RAN is currently fulfilling for the QoS Flow after Notification control has occurred.

### <Dual 3GPP access>

### 1. Dual 5G satellite access

This use case describes a scenario where an autonomous ship is remotely controlled from shore. The ship has a UE that is served by two satellite RANs (GEO and LEO) belonging to the same PLMN that is managed by a 5G satellite operator. The ship UE has a single PLMN subscription.

Dual 5G satellite access is applied to accommodate high amount of data traffic for remote control operations. For better performance of the autonomous ship operations, the delay sensitive applications (e.g., remote control operations, collision/accident prevention, emergency management, etc.) use LEO satellite link as it has smaller UE to ground propagation delay than GEO satellite connection (max 30 ms for LEO vs max 280 ms for GEO, TS 22.261 clause 7.4.1). Other applications (i.e. delay tolerant, such as sensor data monitoring, video surveillance, etc.) may use GEO satellite link or aggregate the traffic over both accesses.

### 2. NTN-based dual 3GPP access

Aggregating two 3GPP access links simultaneously, of which one is non-terrestrial network, can provide the following 5G service enablers, relevant especially in underserved areas, characterized by limited bandwidth or un-reliable access link:
- Extended Mobile Broadband
- Ultra Reliable service communications

A number of service scenarios (e.g. user in residential homes in remote areas, users on board vehicles, high speed trains, vessels or airplanes), would benefit from the combination of terrestrial and non-terrestrial access or two different non-terrestrial access (e.g. GSO and NGSO based) to meet the targeted service performances in terms of data rate and/or reliability.

In underserved areas, the bandwidth provided by a terrestrial based access (e.g. NR or LTE) may be limited at cell edge. Adding a NTN based NG-RAN will be an enable to achieve the targeted experience data rate.

Under some scenarios such as on board high speed trains, the service area may not be fully homogeneous along the rail track and multi connectivity involving NTN-based NG-RAN would enable to provide the targeted reliability.

Hence a UE may be connected and served simultaneously by:
- One NTN-based 3GPP access and one terrestrial-based 3GPP access
- One NTN-based 3GPP access (NGSO) and another NTN-based 3GPP access (GSO)
- One NTN-based 3GPP access (NGSO) via two different satellites of the same constellation

The dual access combining can occur for either the uplink or the downlink or both.

The same or different gNB could serve NR cells via the terrestrial access network and via the satellite access network (e.g. with transparent payload on board the satellite).

NTN based NG-RAN may refer to transparent payload satellites as well as regenerative payload satellites with, for example, some gNB functions on board.

### 3. Inter-PLMN or PLMN-SNPN

This example scenario refers to a stadium, served by ad-hoc/in-venue 5G NR deployment (high-capacity) from one SNPN or PLMN network (MNO-A), plus 5G NR coverage, from the outside the stadium, by another PLMN (MNO-B). There is no NW sharing in place between the two 5G networks.

The above example may similarly apply to other local premises, e.g., campus, enterprise, mall, factory.

MNO-B has business and roaming partnership with MNO-A, including the agreement to lease extra capacity (from MNO-A) to provide ultra-broadband experience to some of MNO-B "golden" customers. The agreement between MNO-A&B entails the ability for those MNO-B users to get higher data rate connection, by allowing their data traffic to use an extra NR connectivity link from PLMN-A's (with anchor and aggregation in their HPLMN' CN). Such functionality is assumed to be supported by both PLMNs' CNs, UEs (of golden MNO-B users), and is associated with a set of traffic policies and conditions, negotiated by the MNOs, which the HPLMN can control and provision (to UEs and CN entities).

3GPP supports a method for notifying applications whether the QoS of a terminal is being properly maintained. The AF may request notification control to the NEF through the
Nnef_AFsessionWithQoS_Create/Nnef_AFsessionWithQoS_Update service for notification control. At this time, the AF may provide Alternative Service Requirements (QoS Reference parameters or Requested Alternative QoS Parameter Set(s)). In this case, the PCF may create Alternative QoS Parameter Set(s) based on the Alternative Service Requirements provided by the AF, and the SMF may create Alternative QoS Profile(s) based on the Alternative QoS Parameter Set(s) provided by the PCF. The SMF may transmit information for notification control to the NG-RAN and transmit the created Alternative QoS Profile(s) together. If the NG-RAN cannot satisfy the QoS provided by the SMF, and if an Alternative QoS Profile is not available, it may signal to the SMF, stating "GFBR can no longer be guaranteed." If the NG-RAN cannot satisfy the QoS provided by the SMF, and if an Alternative QoS Profile exists, it may select the highest priority QoS profile among multiple Alternative QoS Profiles that can currently satisfy the QoS requirement and report the reference value of the satisfactory Alternative QoS Profile to the SMF.

A UE may receive services using two 3GPP RATs simultaneously. The aforementioned notification control may be used for the 5G network to inform the AF whether the QoS of a specific UE requested by the AF is properly supported by the 3GPP access. Traditionally, a base station could determine whether QoS was properly supported. However, when services are provided using two 3GPP access points simultaneously, a single base station may not be able to determine whether a terminal's QoS is properly supported. A solution is needed.

For example, an AF may require a 10 Mbps data rate for a media service. To achieve this, the AF could request QoS to 5GC and request that it notify AF if it is not satisfied.. If one 3GPP access point can provide 7 Mbps and the other 3GPP access point can provide 5 Mbps, the terminal can receive sufficient service for 10 Mbps. However, if conventional notification control is applied, the base station may report that "GFBR can no longer be guaranteed" because one 3GPP access point cannot meet 10 Mbps. This could result in the AF changing the data rate for the media service, resulting in lower quality data transmission, even though this is possible through dual 3GPP access points.

The proposed method for supporting QoS notification control in dual 3GPP access can be configured by combining one or more of the following operations/configurations/steps.

The method proposed in this specification may apply the operations described in the aforementioned Notification Control section.

The method proposed in this specification may apply the operations described in the aforementioned Dual 3GPP Access section.

In this specification, the terms User Equipment (UE) and Terminal are used interchangeably.

In this specification, the terms Subscriber and User are used interchangeably.

In this specification, the terms Application Function (AF) and Application Server (AS) are used interchangeably.

In this specification, it is assumed that a single PDU session is serviced through two 3GPP access, using concepts/procedures similar to conventional MA PDU sessions.

### I. First Embodiment

When using dual 3GPP accesses, a method for the SMF/PCF to generate an alternative QoS profile may be proposed.

Regardless of whether the AF provides Alternative Service Requirements, the SMF/PCF may directly generate an Alternative QoS Profile/Alternative QoS parameter set.

The SMF/PCF may generate an Alternative QoS Profile and provide it to the base station corresponding to each 3GPP access. If a 3GPP access does not satisfy the original QoS, the base station may inform the SMF/PCF of the reference index value corresponding to the QoS that can be satisfied among the Alternative QoS Profiles.

Based on notifications (notifications received from the base station) for each 3GPP access, the SMF/PCF may determine whether the QoS requirements requested by the AF can be met for the actual dual 3GPP accesses (the first and second accesses).

For example, if the AF requests a data rate of 10 Mbps, the SMF/PCF may generate alternative QoS profiles of 1 Mbps, 3 Mbps, 5 Mbps, and 7 Mbps. The SMF/PCF may then transmit these profiles to the base stations corresponding to each 3GPP access.

If the SMF/PCF receives a notification indicating that the QoS requirements for only one access (the first access) cannot be met, the SMF/PCF may not report an event to the AF because the other 3GPP access (the second access) may meet the 10 Mbps requirement.

If the SMF/PCF receives information that one 3GPP access (access 1) can support 5 Mbps and the other access (access 2) can support 7 Mbps, the SMF/PCF may determine that 10 Mbps can be achieved by transmitting data through both accesses and may not report an event to the AF.

If the SMF/PCF receives information that one 3GPP access (access 1) can support 1 Mbps and the other 3GPP access (access 2) can support 7 Mbps, the SMF/PCF may determine that the QoS requirements requested by the AF cannot be met and may notify the AF. This is because the maximum data rate is 8 Mbps, even when both accesses are simultaneously used, and therefore 10 Mbps cannot be met.

While the bitrate was used as an example above, PDB and/or PER may also be considered to determine whether QoS requirements are met.

Even if the AF provides Alternative Service Requirements, the SMF/PCF may generate and transmit an Alternative QoS Profile to the base station to recognize more detailed 3GPP access state.

For example, if the AF sends a QoS requirement of 10 Mbps and Alternative Service Requirements of 5 Mbps and 3 Mbps, the SMF/PCF may create an Alternative QoS Profile/Alternative QoS Parameter Set by subdividing the Alternative QoS Profile into 7Mbps, 5Mbps, 3Mbps, 2Mbps, etc.

If the PCF generates Alternative QoS Parameter Set(s) and provides them to the SMF, the SMF may then generate Alternative QoS Profile(s) based on these Alternative QoS Parameter Set(s).

Alternatively, even if the PCF does not provide the SMF with an Alternative QoS Parameter Set(s), the SMF may generate an Alternative QoS Profile(s).

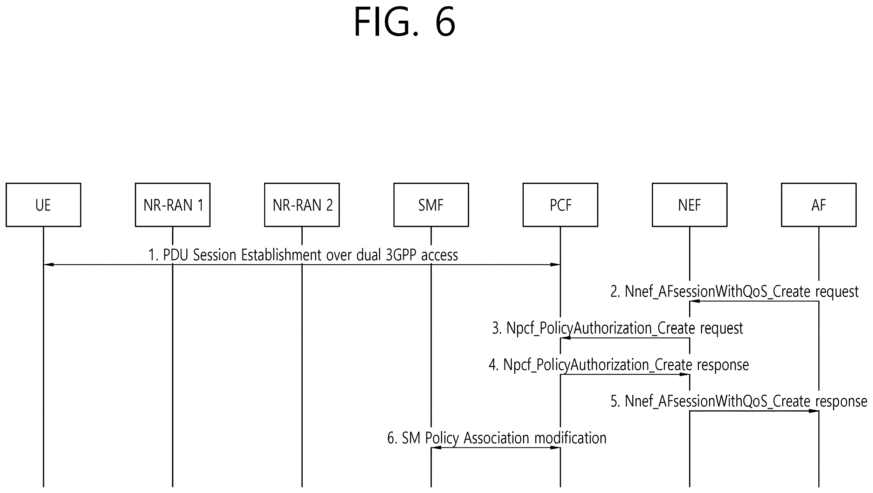

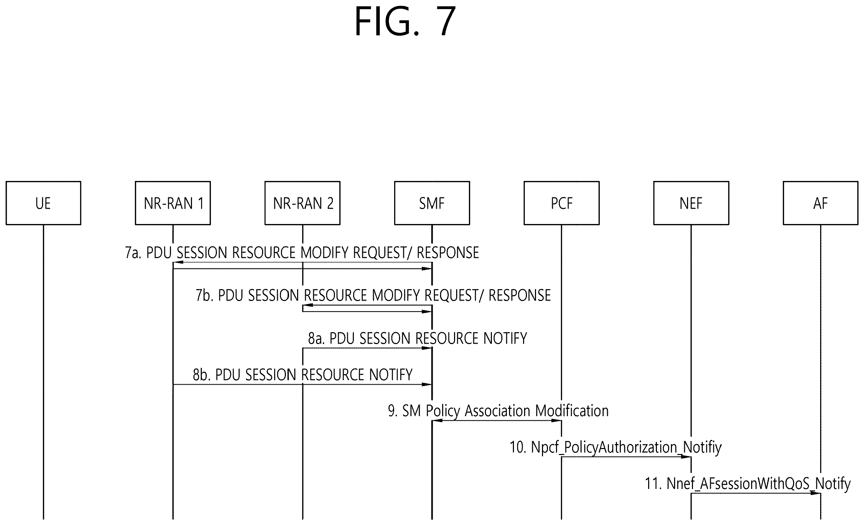

**FIGS. 6** **and** **7** **shows flowcharts according to the first embodiment of the present disclosure.**

The PCF may generate an Alternative QoS Parameter Set(s) and transmit it to the SMF. The SMF may then generate an Alternative QoS Profile(s) based on the generated Alternative QoS Parameter Set(s).

Step 1. The UE may perform a registration procedure and a PDU session establishment procedure. At this time, a PDU session may be created using two 3GPP accesses using a method similar to the conventional MAPDU session establishment procedure. One PDU session may be established using two 3GPP accesses.

During this process, the PCF may recognize that a PDU session supporting dual 3GPP access has been established, based on i) information such as access type and the ULI from the SMF, or ii) an indication that the PDU session is via dual 3GPP access.

Steps 2-5. The AF may request QoS for the UE's PDU session. At this time, the AF may request notification control for the GBR QoS flow. The AF's request may include QoS requirements.

The above QoS requirements may be Packet Delay Budget (PDB), Packet Error Rate (PER), or bitrate.

The AF may request QoS for the UE's PDU session from the NEF. The NEF may transmit information about the AF's request to the PCF.

The PDU session may be due to dual 3GPP access.

In this regard, Section 4.15.6.6 (Setting up an AF session with required QoS procedure) of TS 23.502 v18.2.0 may be applied.

Step 6. The PCF may update the PCC rules for creating a GBR QoS flow based on the QoS requested by the AF.

At this time, the PCF may recognize that the PDU session supports dual 3GPP access through Step 1 and may generate an Alternative QoS Parameter Set(s). At this time, the PCF may generate an Alternative QoS Parameter Set(s) based on values preset by the operator. Alternatively, the PCF may generate an Alternative QoS Parameter Set(s) based on subscriber information of the terminal.

Step 7. The SMF may transmit a PDU SESSION RESOURCE MODIFY REQUEST for creating a GBR QoS flow to each base station (NG-RAN) corresponding to the dual 3GPP access through the AMF. The PDU SESSION RESOURCE MODIFY REQUEST may include information about the QoS requested by the AF.

The SMF may generate an Alternative QoS Profile(s) based on the Alternative QoS Parameter Set(s) received from the PCF. The PDU SESSION RESOURCE MODIFY REQUEST may include the Alternative QoS Profile(s).

The Alternative QoS Profile(s) may include information about multiple QoS levels. For example, the Alternative QoS Profile(s) may include information about QoS levels of 7 Mbps, 5 Mbps, 3 Mbps, and 2 Mbps.

Step 8. Each NG-RAN (NG-RAN1 and NG-RAN2) may transmit notification control information to the SMF.

The notification control information may include information about whether the QoS requested by the AF for the corresponding access has been satisfied and/or information about the best QoS among the alternative QoS profiles that can be satisfied.

Each NG-RAN (NG-RAN1 and NG-RAN2) may determine whether the QoS requested by the AF can be met based on information received from the SMF. For example, each NG-RAN (NG-RAN1 and NG-RAN2) may determine whether the QoS for each 3GPP access satisfies the QoS requirements requested by the AF.

If the QoS requested by the AF cannot be met, each NG-RAN (NG-RAN1 and NG-RAN2) may notify the SMF that it cannot satisfy the QoS.

If the QoS requested by the AF cannot be met, each NG-RAN (NG-RAN1 and NG-RAN2) may transmit to the SMF a reference index corresponding to the best QoS among the alternative QoS profile(s) that can be met.

If the QoS requested by the AF cannot be satisfied and none of the Alternative QoS Profile(s) can be satisfied, each NG-RAN (NG-RAN1 and NG-RAN2) may notify the SMF that no QoS can be satisfied.

Step 9. The SMF may transmit notification control information (information on whether the QoS for a given access has been satisfied and/or the best QoS among the Alternative QoS Profiles that can be satisfied) to the PCF.

The SMF may transmit information to the PCF indicating that the NG-RAN cannot satisfy the QoS. At this time, reference information regarding the Alternative QoS Profile(s) sent by the NG-RAN may also be transmitted.

At this time, the SMF may also transmit, to the PCF, information (e.g., access type, RAT type, etc.) regarding which access (NG-RAN1 and/or NG-RAN2) is not satisfied. If this information is not transmitted, the PCF may not know which of the dual 3GPP accesses (the first 3GPP access and the second 3GPP access) the notification control information is for. To address this issue, the SMF may also transmit, to the PCF, information (e.g., RAT type) that can distinguish each 3GPP access.

If the RAT types of the dual 3GPP accesses (the first 3GPP access and the second 3GPP access) are the same, the network (e.g., the SMF, PCF, or another network node) may assign a path ID to each path. The SMF may use this path ID to inform the PCF which 3GPP access the notification is for.

Alternatively, even if the SMF receives notification control information from only one 3GPP access (a single NG-RAN), it may always transmit notification control information for both 3GPP accesses to the PCF. This allows the PCF to determine whether QoS is satisfied based on the information for both 3GPP accesses, without having to distinguish which 3GPP access the notification is for, since it always receives notification control information for both 3GPP accesses.

Not limited to the aforementioned method, the PCF may determine which of the two 3GPP accesses the notification control information is for through various methods.

During this process, the PCF may consider the session's steering mode.

For example, if the steering mode is Active-Standby, where transmission is performed over only one access, the PCF may check whether QoS is satisfied by considering only the notification control information of the currently transmitting access. If both 3GPP accesses are available, such as Load-Balancing, the PCF may check whether QoS is satisfied by considering both the notification control information of each access.

Based on the notification control information (information on whether QoS is satisfied for a given access and/or the best QoS among the alternative QoS profiles that can be satisfied), the PCF may update the QoS parameter set (Alternative QoS Parameter Set(s)) for one or more of the two 3GPP accesses and provide the SMF with a PCC rule containing the updated QoS parameter set(s). Based on this, the SMF may then generate Alternative QoS Profile(s) and provide them to the NG-RAN(s).

Step 10. The PCF may determine whether the QoS requested by the AF can be met using dual 3GPP access, based on the information received from the SMF. If the QoS requested by the AF cannot be met, the PCF may notify the NEF.

Alternatively, the SMF may determine whether the QoS requested by the AF can be met using the notification control information received in Step 8. The SMF may transmit its determination to the PCF. Based on this, the PCF may notify the NEF of the determination.

If the sum of the satisfactory QoS reported by the first base station (the QoS satisfied by the first base station among the alternative QoS profiles) and the satisfactory QoS reported by the second base station (the QoS satisfied by the second base station among the alternative QoS profiles) satisfies the QoS requirement requested by the AF, the PCF/SMF may determine that the QoS requirement is satisfied.

If the sum of the satisfactory QoS reported by the first base station (the QoS satisfied by the first base station among the alternative QoS profiles) and the satisfactory QoS reported by the second base station (the QoS satisfied by the second base station among the alternative QoS profiles) does not satisfy the QoS requirement requested by the AF, the PCF/SMF may determine that the QoS requirement is not satisfied.

For example, if the sum of the satisfactory bit rate reported by the first base station (the bit rate that the first base station satisfies in the alternative QoS profile) and the satisfactory bit rate reported by the second base station (the bit rate that the second base station satisfies in the alternative QoS profile) is greater than the threshold bit rate included in the QoS requirements requested by the AF, the PCF/SMF may determine that the QoS requirements are satisfied.

For example, if the sum of the satisfactory bit rate reported by the first base station (the bit rate that the first base station satisfies in the alternative QoS profile) and the satisfactory bit rate reported by the second base station (the bit rate that the second base station satisfies in the alternative QoS profile) is less than the threshold bit rate included in the QoS requirements requested by the AF, the PCF/SMF may determine that the QoS requirements are not satisfied.

For example, if either the satisfactory PDB reported by the first base station (the PDB satisfied by the first base station among the alternative QoS profiles) or the satisfactory PDB reported by the second base station (the PDB satisfied by the second base station among the alternative QoS profiles) is smaller than the threshold PDB included in the QoS requirements requested by the AF, the PCF/SMF may determine that the QoS requirements are satisfied.

For example, if both the satisfactory PDB reported by the first base station (the PDB satisfied by the first base station among the alternative QoS profiles) or the satisfactory PDB reported by the second base station (the PDB satisfied by the second base station among the alternative QoS profiles) are larger than the threshold PDB included in the QoS requirements requested by the AF, the PCF/SMF may determine that the QoS requirements are not satisfied.

For example, if either the satisfactory PER reported by the first base station (the PER satisfied by the first base station among the alternative QoS profiles) or the satisfactory PER reported by the second base station (the PER satisfied by the second base station among the alternative QoS profiles) is less than the threshold PER included in the QoS requirements requested by the AF, the PCF/SMF may determine that the QoS requirements are satisfied.

For example, if both the satisfactory PER reported by the first base station (the PER satisfied by the first base station among the alternative QoS profiles) and the satisfactory PER reported by the second base station (the PER satisfied by the second base station among the alternative QoS profiles) are greater than the threshold PER included in the QoS requirements requested by the AF, the PCF/SMF may determine that the QoS requirements are not satisfied.

Step 11. The NEF may notify the AF that the requested QoS is not satisfied.

### II. Second Embodiment

Regarding MA PDU sessions, the performance (Packet Loss Rate - PLR, Round Trip Time - RTT) of 3GPP and non-3GPP accesses may be measured using the Performance Measurement Function (PMF). A method for determining which access to transmit traffic through based on measured performance is supported for MA PDU sessions. To achieve this, both the UE and the UPF must support PMF, and PMFP messages may be sent and received for performance measurement.

Notification control may be used to notify the network if any of the three parameters-Packet Delay Budget (PDB), Packet Error Rate (PER), and Bitrate-are not met.

In notification control, if the base station determines that any of the three parameters (PDB, PER, Bitrate) for a specific access (or session) is not met, the base station may notify the network of this fact.

PDB may be measured though RTT (round trip time) measurement by the PMF. PER may be measured using the PLR (Packet Loss Rate) of the PMF.

However, bitrate is not currently supported by the PMF. Therefore, the PMF may be updated/enhanced to allow bitrate measurement.

The current PLR measurement process may be updated to measure bitrate.

For PLR, UL/DL may be measured separately.

For DL, the UPF may initiate counting of packets transmitted to the UE. The UPF may request, to the UE, for counting of packets received by the UE. Counting by the UPF and the UE may be performed for a certain period of time. After the certain period of time, the UPF may stop counting and request the UE to stop counting and report the counting result. The UPF may receive counting results from the UE. Based on the counting result from the UE and the counting result of the UPF, the UPF may calculate the PLR by calculating the ratio of received packets to transmitted packets.

For UL, the UE may count packets transmitted to the UPF, and the UPF may count packets received from the UE. If packet counting includes the size and quantity of transmitted and received packets, the bitrate for actual traffic may be calculated.

If notification control is required, the SMF/PCF may measure the performance of each 3GPP access using enhanced PMF measurements. Based on this, the SMF/PCF may check whether the QoS requested by the AF is met.

To measure the performance of each 3GPP access, the SMF/PCF may subscribe to an event in the UPF that reports a result of PMF-based measurements. This allows the SMF/PCF to directly receive a result of PMF-based measurements from the UPF.

In conventional PMF-based measurements, the UE and UPF perform measurements independently and do not exchange the measured results. Therefore, only the UE has the information about the DL measured by the UE.

However, to determine if QoS is properly supported, the UPF may need UE-measured information about DL. Therefore, the UPF may request the UE to initiate DL measurements and to report the measured information via a PMF message. For this purpose, a new PMF message may be defined and used.

Using this method, even if the SMF receives an Alternative QoS Parameter Set from the PCF, the SMF may not generate an Alternative QoS Profile(s) and may not transmit it to the NG-RAN.

Alternatively, the SMF may generate Alternative QoS Profile(s) and transmit them to each NG-RAN. If the SMF receives information from the NG-RAN that the QoS is not met, the SMF may enable access measurement through PMF. Based on this, the SMF may determine/verify whether the QoS can be met through dual 3GPP access. Based on the result of the determination/verification, the SMF may decide whether to send notification control information to the PCF. For example, if the QoS cannot be met, the SMF may notify the PCF of this fact.

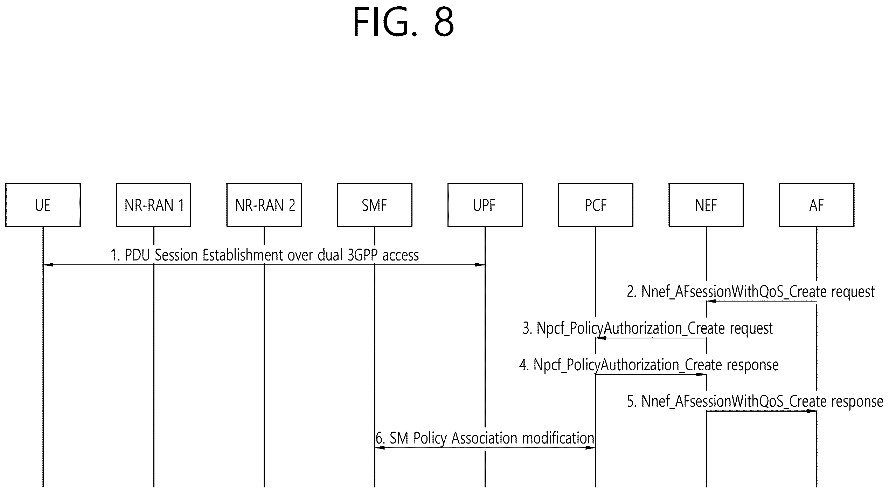

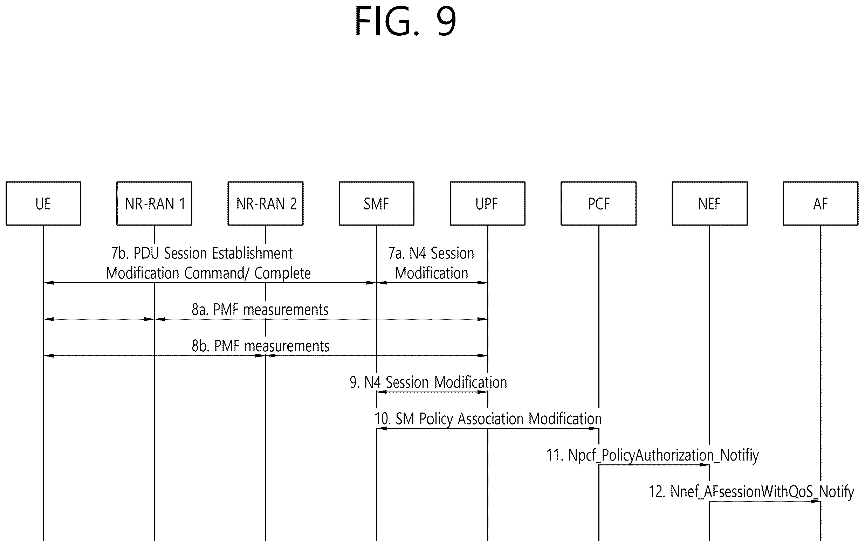

**FIGS. 8** **and** **9** **show flowcharts according to the second embodiment of the present specification.**

The following describes the proposed features of this specification.

The SMF may obtain measurement information using the PMF from the UPF and determine whether to send notification control information.

Step 1. The UE may perform a registration procedure and a PDU session establishment procedure. At this time, a PDU session may be created using two 3GPP accesses using a method similar to the conventional MAPDU session establishment procedure. One PDU session may be established using two 3GPP accesses.

Steps 2-5. The AF may request QoS for the UE's PDU session. At this time, the AF may request notification control for a GBR QoS flow. The AF's request may include QoS requirements.

The AF may request QoS for the UE's PDU session from the NEF. The NEF may transmit information about the AF's request to the PCF.

The PDU session may be a dual 3GPP access.

In this regard, Section 4.15.6.6 of TS 23.502 v18.2.0 (Setting up an AF session with required QoS procedure) may be applied.

Step 6. The PCF may update the PCC rules for creating GBR QoS flows based on the QoS requested by the AF.

Step 7. The SMF may recognize that it must perform an event report for notification control based on the PCC rules issued by the PCF.

For PDU sessions using dual 3GPP accesses, the SMF may determine that PMF measurements should be performed without transmitting notification control information to the NG-RAN. The SMF may determine that PMF measurements should be used to measure performance on each 3GPP access.

If the SMF has not yet transmitted Measurement Assistance Information (e.g., PMF address information, a list of QoS flows, etc.) to the UE, it may transmit this information to the UE during the PDU Session Modification procedure.

If necessary, the SMF may request the UPF to allocate PMF address information during the N4 Session Modification procedure. Furthermore, unlike the prior art, regardless of the steering mode, the SMF may send a message to the UPF containing information instructing it to perform access performance measurement.

For example, the SMF may instruct the UPF to perform measurements on PLR, RTT, and/or bitrate. At this time, the SMF may instruct the UPF to perform a measurement report under specific conditions (e.g., when a threshold is exceeded) or periodically. Furthermore, the SMF may instruct the UPF to report the measurement results for each 3GPP access or the combined measurement values of both accesses when performing the report.

Step 8. The UPF may perform access performance measurements through each 3GPP access according to the N4 rule from SMF in step 7.

Step 9. The UPF may report the access performance measurement results to the SMF if the conditions are met according to the report configuration set by the SMF.

The report may include measured performance results for both accesses. For example, the report may include measured performance results for each access.

Based on the report received from the UPF, the SMF may determine whether the QoS requirements requested by the AF are met.

Based on the report received from the UPF, the SMF may determine whether the QoS requirements requested by the AF can be met through dual 3GPP access for a specific PDU session requested by the AF.

For example, the SMF may determine whether the combined performance results of the two accesses satisfy the QoS requirements requested by the AF. If the combined performance results of the two accesses are greater than or equal to the QoS requirements, the SMF may determine that the QoS requirements are met. If the combined performance results of the two accesses are less than the QoS requirements, the SMF may determine that the QoS requirements are not met.

If the QoS requirements are not met, the SMF may notify the PCF that the QoS requirements requested by the AF cannot be met.

Step 10. Based on the information received from the SMF, the PCF may notify the NEF that the QoS requirements requested by the AF cannot be met.

Step 11. The NEF may notify the AF that it cannot meet the QoS requirements.

In the case of dual 3GPP access, QoS satisfaction may be communicated through the application layer, enabling seamless service delivery.

If the SMF/PCF receives notification control-related information from the AF, and the PDU session uses dual 3GPP access, the SMF/PCF may directly generate an alternative QoS profile and transmit it to each 3GPP access, even if the information received from the AF does not include alternative service requirements.

Based on the notification control/alternative QoS profile information reported by the NG-RAN, the SMF/PCF may determine whether the QoS requested by the AF can be met in the PDU session using dual 3GPP access. If it cannot be met, the SMF/PCF may notify the NEF/AF.

When the SMF/PCF receives notification control-related information from the AF, and the PDU session uses dual 3GPP access, the SMF/PCF may configure the UE and UPF to perform PMF measurements to check whether the QoS requested by the AF is satisfied, and may configure the UPF to report access performance measurements.

Based on the access performance measurement report reported by the UPF, the SMF/PCF may determine whether the QoS requested by the AF in the PDU session using dual 3GPP access can be satisfied, and if not, can notify the NEF/AF.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

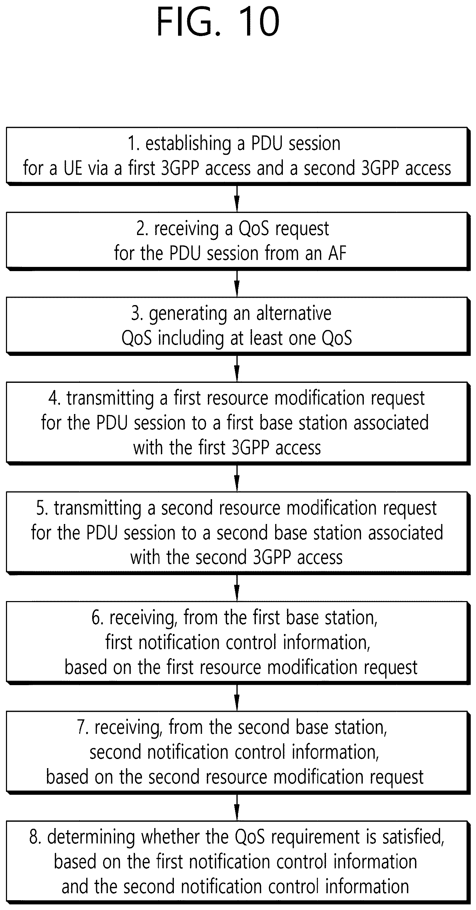

**FIG. 10** **shows the procedure of at least one NF according to disclosure of the present specification.**
1. The at least one NF may establish a Packet Data Unit (PDU) session for a User Equipment (UE) via a first 3rd Generation Partnership Project (3GPP) access and a second 3GPP access.
2. The at least one NF may receive a Quality of Service (QoS) request for the PDU session from an Application Function (AF).

The QoS request may include QoS requirement.

3. The at least one NF may generate, by a Session Management Function (SMF) among the at least one NF, an alternative QoS including at least one QoS, based on the QoS request.

4. The at least one NF may transmit, by the SMF, a first resource modification request for the PDU session to a first base station associated with the first 3GPP access.

5. The at least one NF may transmit, by the SMF, a second resource modification request for the PDU session to a second base station associated with the second 3GPP access.

The first resource modification request and the second resource modification request may include the alternative QoS.

6. The at least one NF may receive, by the SMF from the first base station, first notification control information, based on the first resource modification request.

7. The at least one NF may receive, by the SMF from the second base station, second notification control information, based on the second resource modification request.

The first notification control information may include information on QoS, which can be satisfied in the first 3GPP access, among the alternative QoS, based on QoS for the first 3GPP access not satisfying the QoS requirement,

The second notification control information may include information on QoS, which can be satisfied in the second 3GPP access, among the alternative QoS, based on QoS for the second 3GPP access not satisfying the QoS requirement,

8. The at least one NF may determine whether the QoS requirement is satisfied, based on the first notification control information and the second notification control information.

The at least one NF may transmit, to the AF, a notification that the QoS requirement is not satisfied, based on the determination that the QoS requirement is not satisfied.

The at least one NF may generate, by a Policy Control Function (PCF) among the at least one NF, alternative QoS parameters based on the QoS request.

The at least one NF may transmit, by the PCF to the SMF, the alternative QoS parameters.

The step of generating the alternative QoS may be performed, based on the alternative QoS parameters.

The step of determining whether the QoS requirement is satisfied may be performed by a Policy Control Function (PCF) among the at least one NF.

The step of determining whether the QoS requirement is satisfied may be performed by the SMF.

The step of determining whether the QoS requirement is satisfied may be:
determining that the QoS requirement is satisfied, based on sum of the QoS that can be satisfied in the first 3GPP access and the QoS that can be satisfied in the second 3GPP access being greater than or equal to the QoS requirement.

The QoS requirement, the alternative QoS, the QoS for the first 3GPP access and the QoS for the second 3GPP access may be for Packet Delay Budget (PDB), Packet Error Rate (PER), or bitrate.

The QoS requirement may include information for bitrate.

The step of determining whether the QoS requirement is satisfied may be:
determining that the QoS requirement is not satisfied, based on sum of bitrate that can be satisfied in the first 3GPP access and bitrate that can be satisfied in the second 3GPP access being less than threshold bitrate.

The QoS requirement may include information for PDB.

The step of determining whether the QoS requirement is satisfied may be:
determining that the QoS requirement is not satisfied, based on both PDB that can be satisfied in the first 3GPP access and PDB that can be satisfied in the second 3GPP access being greater than threshold PDB.

The QoS requirement may include information for PER.

The step of determining whether the QoS requirement is satisfied may be:
determining that the QoS requirement is not satisfied, based on both PER that can be satisfied in the first 3GPP access and PER that can be satisfied in the second 3GPP access being greater than threshold PER.

The first notification control information may include information that QoS for the first 3GPP access does not satisfy the QoS requirement.

The second notification control information may include information that QoS for the second 3GPP access does not satisfy the QoS requirement.

Hereinafter, an apparatus for performing communication according to some embodiments of the present specification will be described.

For example, a apparatus may include a processor, a transceiver, and a memory.

For example, a processor may be configured to be operably coupled with a memory and a processor.

The processor may perform: establishing a Packet Data Unit (PDU) session for a User Equipment (UE) via a first 3rd Generation Partnership Project (3GPP) access and a second 3GPP access; receiving a Quality of Service (QoS) request for the PDU session from an Application Function (AF); wherein the QoS request includes QoS requirement; generating, by a Session Management Function (SMF) among the at least one NF, an alternative QoS including at least one QoS, based on the QoS request; transmitting, by the SMF, a first resource modification request for the PDU session to a first base station associated with the first 3GPP access; transmitting, by the SMF, a second resource modification request for the PDU session to a second base station associated with the second 3GPP access; wherein the first resource modification request and the second resource modification request include the alternative QoS, receiving, by the SMF from the first base station, first notification control information, based on the first resource modification request; receiving, by the SMF from the second base station, second notification control information, based on the second resource modification request; and wherein the first notification control information includes information on QoS, which can be satisfied in the first 3GPP access, among the alternative QoS, based on QoS for the first 3GPP access not satisfying the QoS requirement, wherein the second notification control information includes information on QoS, which can be satisfied in the second 3GPP access, among the alternative QoS, based on QoS for the second 3GPP access not satisfying the QoS requirement, determining whether the QoS requirement is satisfied, based on the first notification control information and the second notification control information.

Hereinafter, a processor for providing communication according to some embodiments of the present specification will be described.

The processor is configured to: establishing a Packet Data Unit (PDU) session for a User Equipment (UE) via a first 3rd Generation Partnership Project (3GPP) access and a second 3GPP access; receiving a Quality of Service (QoS) request for the PDU session from an Application Function (AF); wherein the QoS request includes QoS requirement; generating, by a Session Management Function (SMF) among the at least one NF, an alternative QoS including at least one QoS, based on the QoS request; transmitting, by the SMF, a first resource modification request for the PDU session to a first base station associated with the first 3GPP access; transmitting, by the SMF, a second resource modification request for the PDU session to a second base station associated with the second 3GPP access; wherein the first resource modification request and the second resource modification request include the alternative QoS, receiving, by the SMF from the first base station, first notification control information, based on the first resource modification request; receiving, by the SMF from the second base station, second notification control information, based on the second resource modification request; and wherein the first notification control information includes information on QoS, which can be satisfied in the first 3GPP access, among the alternative QoS, based on QoS for the first 3GPP access not satisfying the QoS requirement, wherein the second notification control information includes information on QoS, which can be satisfied in the second 3GPP access, among the alternative QoS, based on QoS for the second 3GPP access not satisfying the QoS requirement, determining whether the QoS requirement is satisfied, based on the first notification control information and the second notification control information.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: establishing a Packet Data Unit (PDU) session for a User Equipment (UE) via a first 3rd Generation Partnership Project (3GPP) access and a second 3GPP access; receiving a Quality of Service (QoS) request for the PDU session from an Application Function (AF); wherein the QoS request includes QoS requirement; generating, by a Session Management Function (SMF) among the at least one NF, an alternative QoS including at least one QoS, based on the QoS request; transmitting, by the SMF, a first resource modification request for the PDU session to a first base station associated with the first 3GPP access; transmitting, by the SMF, a second resource modification request for the PDU session to a second base station associated with the second 3GPP access; wherein the first resource modification request and the second resource modification request include the alternative QoS, receiving, by the SMF from the first base station, first notification control information, based on the first resource modification request; receiving, by the SMF from the second base station, second notification control information, based on the second resource modification request; and wherein the first notification control information includes information on QoS, which can be satisfied in the first 3GPP access, among the alternative QoS, based on QoS for the first 3GPP access not satisfying the QoS requirement, wherein the second notification control information includes information on QoS, which can be satisfied in the second 3GPP access, among the alternative QoS, based on QoS for the second 3GPP access not satisfying the QoS requirement, determining whether the QoS requirement is satisfied, based on the first notification control information and the second notification control information.

The present specification may have various effects.

For example, through the procedure disclosed in this specification, it is possible to determine whether QoS is satisfied by taking into account the characteristics of dual 3GPP access.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method in a wireless communication system, performed by at least one Network Function (NF), comprising:
establishing a Packet Data Unit (PDU) session for a User Equipment (UE) via a first 3rd Generation Partnership Project (3GPP) access and a second 3GPP access;
receiving a Quality of Service (QoS) request for the PDU session from an Application Function (AF);
wherein the QoS request includes QoS requirement;
generating, by a Session Management Function (SMF) among the at least one NF, an alternative QoS including at least one QoS, based on the QoS request;
transmitting, by the SMF, a first resource modification request for the PDU session to a first base station associated with the first 3GPP access;
transmitting, by the SMF, a second resource modification request for the PDU session to a second base station associated with the second 3GPP access;
wherein the first resource modification request and the second resource modification request include the alternative QoS,
receiving, by the SMF from the first base station, first notification control information, based on the first resource modification request;
receiving, by the SMF from the second base station, second notification control information, based on the second resource modification request; and
wherein the first notification control information includes information on QoS, which can be satisfied in the first 3GPP access, among the alternative QoS, based on QoS for the first 3GPP access not satisfying the QoS requirement,
wherein the second notification control information includes information on QoS, which can be satisfied in the second 3GPP access, among the alternative QoS, based on QoS for the second 3GPP access not satisfying the QoS requirement,
determining whether the QoS requirement is satisfied, based on the first notification control information and the second notification control information.

2. The method of claim 1, further comprising:
transmitting, to the AF, a notification that the QoS requirement is not satisfied, based on the determination that the QoS requirement is not satisfied.

3. The method of claim 1 or claim 2, further comprising:
generating, by a Policy Control Function (PCF) among the at least one NF, alternative QoS parameters based on the QoS request; and
transmitting, by the PCF to the SMF, the alternative QoS parameters;
wherein the step of generating the alternative QoS is performed, based on the alternative QoS parameters.

4. The method of one of the claims 1 to 3,
wherein the step of determining whether the QoS requirement is satisfied is performed by a Policy Control Function (PCF) among the at least one NF.

5. The method of one of the claims 1 to 3,
wherein the step of determining whether the QoS requirement is satisfied is performed by the SMF.

6. The method of one of the claims 1 to 5,
wherein the step of determining whether the QoS requirement is satisfied is:
determining that the QoS requirement is satisfied, based on sum of the QoS that can be satisfied in the first 3GPP access and the QoS that can be satisfied in the second 3GPP access being greater than or equal to the QoS requirement.

7. The method of one of the claims 1 to 6,
wherein the QoS requirement, the alternative QoS, the QoS for the first 3GPP access and the QoS for the second 3GPP access are for Packet Delay Budget (PDB), Packet Error Rate (PER), or bitrate.

8. The method of one of the claims 1 to 6,
wherein the QoS requirement includes information for bitrate,
wherein the step of determining whether the QoS requirement is satisfied is:
determining that the QoS requirement is not satisfied, based on sum of bitrate that can be satisfied in the first 3GPP access and bitrate that can be satisfied in the second 3GPP access being less than threshold bitrate.

9. The method of one of the claims 1 to 6,
wherein the QoS requirement includes information for PDB,
wherein the step of determining whether the QoS requirement is satisfied is:
determining that the QoS requirement is not satisfied, based on both PDB that can be satisfied in the first 3GPP access and PDB that can be satisfied in the second 3GPP access being greater than threshold PDB.

10. The method of one of the claims 1 to 6,
wherein the QoS requirement includes information for PER,
wherein the step of determining whether the QoS requirement is satisfied is:
determining that the QoS requirement is not satisfied, based on both PER that can be satisfied in the first 3GPP access and PER that can be satisfied in the second 3GPP access being greater than threshold PER.

11. The method of one of the claims 1 to 10,
wherein the first notification control information includes information that QoS for the first 3GPP access does not satisfy the QoS requirement,
wherein the second notification control information includes information that QoS for the second 3GPP access does not satisfy the QoS requirement.

12. At least one NF, to perform communication, comprising:
a transceiver; and
a processor,
wherein the processor performs operation that is a method of one of the claims 1 to 11.

13. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 1 to 11.

14. A non-volatile computer readable storage medium having recorded instructions,
wherein the instructions, based on being executed by one or more processors, cause the one or more processors to perform operation that is a method of one of the claims 1 to 11.
